# EUROPEAN PATENT APPLICATION

(11) **EP 4 822 962 A1**
(43) Date of publication of application: **14.10.2026**
(21) Application number: 26165278.8
(22) Date of filing: 17.03.2026
(51) Int. Cl.: H02K 15/30, H02K 15/04, H02K 3/46

(54) **SYSTEMS AND METHODS FOR AN ELECTRIC MACHINE**

(30) Priority: 09.04.2025 US 202519174265
(71) Applicant: GE Vernova Technology GmbH, 5400 Baden (CH)
(72) Inventor: MARTIN, Matthew R., Greenville, 29615 (US); MACK, Michael, Greenville, 29615 (US)
(74) Representative: Freigutpartners IP Law Firm

(57) **Abstract**

A system for an electric machine (10, 12) may include a fixture (162) including a fixture base (168) defining a first fixture tooth (172, 172a). A fastening void (178, 178a) is defined by the first fixture tooth. The fastening void may extend into the fixture base. A stator winding (22) defines an opening (206) therethrough. A coil carrier (164) defines a carrier body (190) and is configured to operably couple the stator winding to the fixture base.

## Description

### FIELD

The present disclosure generally relates to electric machines, and more particularly, to systems and methods that may be used in the assembly of electric machines. In particular, the invention as herein claimed relates to the subject matter set forth in the claims.

### BACKGROUND

The stator core of an electric machine includes conductive elements, such as stator winding coils, that are electrically coupled together via conductors that may extend externally of the stator core. During installation of the winding coils within the electric machine, each of the coils, which may be electrically coupled to one or more additional coils is to be placed in a defined location within the stator core. Accordingly, a system for distributing the conductive elements within the stator core would be welcomed in the technology.

### BRIEF DESCRIPTION

The invention as herein claimed relates to the subject matters defined in the appended claims. Aspects and advantages of the claimed invention and other subject matter is set forth in part in the following description, or may be obvious from the description, or may be learned through practice of the technology.

In some aspects, the present subject matter is directed to a system for an electric machine. The system includes a fixture including a fixture base defining a first fixture tooth. A first fastening void is defined by the first fixture tooth. The first fastening void extends into the fixture base. A first stator winding defines a first opening therethrough. A coil carrier defines a carrier body. A first fastener includes a first segment selectively retained by the carrier body and positioned through the first opening defined by the first stator winding and a second segment configured to be positioned within the first fastening void.

In general, fastening voids defined by a fixture tooth may in particular be said to be defined in the fixture tooth or more in particular to extend through the respective fixture tooth and into the fixture base. The fastening void may extend from an apex of the respective fixture tooth into a radially outward direction.

In some aspects, the present subject matter is directed to a method for assembling an electric machine. The method includes positioning a first fastener operably coupled with a first coil carrier through a first opening defined by a first stator winding. The method also includes selectively coupling the first fastener to a first fastener void defined by a fixture. The method further includes positioning a second fastener operably coupled with a second coil carrier through a second opening defined by a second stator winding. In addition, the method includes selectively coupling the second fastener to a second fastener void defined by the fixture. The method includes positioning a bracket in a defined position on the fixture and coupling the first stator winding with the second stator winding through a busbar to form a phase ring, wherein a portion of the busbar extends through the bracket. The method further includes brazing a first connection point of the first stator winding with the busbar and brazing a second connection point of the second stator winding with the busbar.

In some aspects, the present subject matter is directed to a system for an electric machine. The system includes a fixture having a fixture base defining a fixture tooth. A fastening void is defined by the fixture tooth. The fastening void extends into the fixture base. A stator winding defines an opening therethrough. A coil carrier defines a carrier body. The coil carrier is configured to operably couple the stator winding to the fixture base. The system further includes an anchor and a brace operably coupled with the anchor and the coil carrier. The brace is configured to maintain a defined distance between the anchor and the coil carrier.

These and other features, aspects, and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1A illustrates a perspective view of an electric machine in accordance with aspects of the present subject matter;
FIG. 1B is a cross-sectional view of the electric machine taken along the line IA-IA of FIG. 1A;
FIG. 2 is a cross-sectional view of the electric machine taken along the line II-II of FIG. 1A;
FIG. 3 is a side perspective view of a wedge portion of an axial end of a stator core of the electric machine in accordance with aspects of the present subject matter;
FIG. 4 is a top perspective view of a wedge portion of an axial end of a stator core of the electric machine in accordance with aspects of the present subject matter;
FIG. 5 is a top perspective view of a wedge portion of an axial end of a stator core of the electric machine including a plurality of stator windings and a plurality of end winding portions in accordance with aspects of the present subject matter;
FIG. 6 is a top perspective view of a wedge portion of an axial end of a stator core of the electric machine including a plurality of busbars in accordance with aspects of the present subject matter;
FIG. 7 is a top perspective view of a wedge portion of an axial end of a stator core of the electric machine including a plurality of brackets in accordance with aspects of the present subject matter;
FIG. 8 is a perspective view of one of the plurality of brackets shown in FIG. 7 in accordance with aspects of the present subject matter;
FIG. 9 is another perspective view of one of the plurality of brackets shown in FIG. 7 in accordance with aspects of the present subject matter;
FIG. 10 is another perspective view of one of the plurality of brackets shown in FIG. 7 in accordance with aspects of the present subject matter;
FIG. 11 is a perspective view of a system configured to assist in forming a subassembly of the electric machine before installation within the stator core, including a portion of a fixture in accordance with aspects of the present subject matter;
FIG. 12 is an alternate perspective view of the system configured to assist in forming a subassembly of the electric machine before installation within the stator core in accordance with aspects of the present subject matter;
FIG. 13 is a perspective view of a portion of the system configured to assist in forming a subassembly of the electric machine before installation within the stator core in accordance with aspects of the present subject matter;
FIG. 14 is a perspective view of a stator with a portion of stator windings installed therein in accordance with aspects of the present subject matter;
FIG. 15 is a perspective view of a stator with the stator windings installed therein in accordance with aspects of the present subject matter; and
FIG. 16 illustrates a flow diagram of a method for assembling an electric machine in accordance with aspects of the present subject matter.

Repeat use of reference characters in the present specification and drawings is intended to represent the same or analogous features or elements of the present technology.

### DETAILED DESCRIPTION

Reference now will be made in detail to embodiments of the disclosure, one or more examples of which are illustrated in the drawings. Each example is provided by way of an explanation of the discourse, not a limitation of the disclosure. In fact, it will be apparent to those skilled in the art that various modifications and variations can be made in the herein claimed invention without departing from the scope of the herein claimed invention. For instance, features illustrated or described as part can be used with another embodiment to yield a still further embodiment. Thus, it is intended that the present disclosure covers such modifications and variations as come within the scope of the appended claims.

The technology of the present application will be described in relation to illustrated examples. The word "exemplary" is used herein to mean "serving as an example, instance, or illustration." Any embodiment described herein as "exemplary" is not necessarily to be construed as preferred or advantageous over other embodiments. Additionally, unless specifically identified otherwise, all embodiments described herein should be considered exemplary.

The detailed description uses numerical and letter designations to refer to features in the drawings. Like or similar designations in the drawings and description have been used to refer to like or similar parts of the invention. As used herein, relational terms, such as first and second, top and bottom, and the like, are used solely to distinguish one entity or action from another entity or action, without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises... a" does not, without more constraints, preclude the existence of additional identical elements in the process, method, article, or apparatus that comprises the element.

As used herein, the terms "first," "second," and "third" may be used interchangeably to distinguish one component from another and are not intended to signify a location or importance of the individual components. The terms "coupled," "fixed," "attached to," and the like refer to both direct coupling, fixing, or attaching, as well as indirect coupling, fixing, or attaching through one or more intermediate components or features, unless otherwise specified herein. The terms "upstream" and "downstream" refer to the relative direction with respect to the flow of electricity. For example, "upstream" refers to the direction from which an electrical current flows, and "downstream" refers to the direction to which the electrical current moves. The term "selectively" refers to a component's ability to operate in various states (e.g., an ON state and an OFF state) based on manual and/or automatic control of the component.

The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus.

Furthermore, any arrangement of components to achieve the same functionality is effectively "associated" such that the functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected" or "operably coupled" to each other to achieve the desired functionality, and any two components capable of being so associated can also be viewed as being "operably couplable" to each other to achieve the desired functionality. Some examples of operably couplable include, but are not limited to, physically mateable, physically interacting components, wirelessly interactable, wirelessly interacting components, logically interacting, and/or logically interactable components.

The singular forms "a," "an," and "the" include plural references unless the context clearly dictates otherwise.

In addition, the term "axial" refers to movement or position parallel to an axis, e.g., an axis of an electric machine such as a generator or motor. The term "radial" refers to movement or position perpendicular to an axis, e.g., an axis of conductive winding or an axis of the electric machine. In cases such as this, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. Finally, the term "circumferential" refers to movement or position around or across an axis, *e.g.,* a circumferential interior surface of a body of a stator of a generator or motor. As indicated above, it will be appreciated that such terms may be applied in relation to the axis of the electric machine.

Terms of approximation, such as "about," "approximately," "generally," and "substantially," are not to be limited to the precise value specified. In at least some instances, the approximating language may correspond to the precision of an instrument for measuring the value, or the precision of the methods or machines for constructing or manufacturing the components and/or systems. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values, and/or endpoints defining range(s) of values. When used in the context of an angle or direction, such terms include within ten degrees greater or less than the stated angle or direction. For example, "generally vertical" includes directions within ten degrees of vertical in any direction, e.g., clockwise or counter-clockwise.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

As used herein, the term "and/or," when used in a list of two or more items, means that any one of the listed items can be employed by itself, or any combination of two or more of the listed items can be employed. For example, if a composition or assembly is described as containing components A, B, and/or C, the composition or assembly can contain A alone; B alone; C alone; A and B in combination; A and C in combination; B and C in combination; or A, B, and C in combination.

In general, the present subject matter is directed to a system that may be implemented to assist in forming a subassembly of the electric machine before installation within the stator core. For example, the system may include a fixture, one or more coil carriers, and/or an anchor to attach one or more stator windings, the one or more brackets, and/or the one or busbars to one another before the aforementioned components are installed in the stator core. In various examples, each of the stator windings, the brackets, and/or the busbars implemented within the electric machine may be preassembled within the system before being installed within the stator core. Additionally or alternatively, a portion of the stator windings, the brackets, and/or the busbars implemented within the electric machine may be preassembled within the system before being installed within the stator core. The system disclosed herein may allow for a more compact electric machine with reduced housing size and weight and/or a spacing between active electrical components to be reduced based on electrical clearances (voltage level) as opposed to mechanical considerations and in situ space requirements for manufacturing processes (*e.g.,* induction brazing).

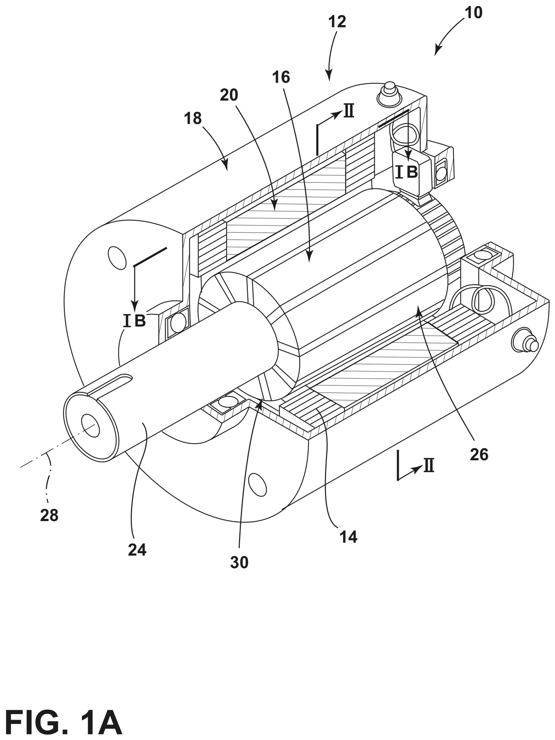

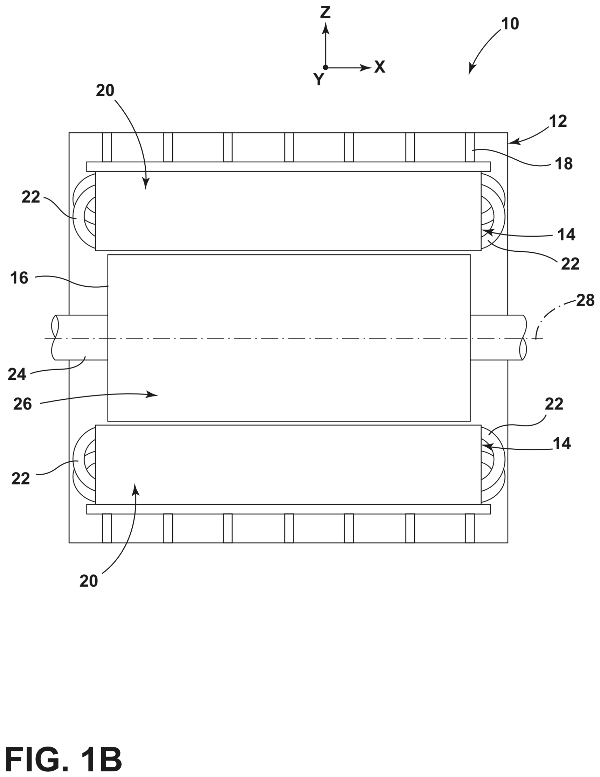

Referring now to FIGS. 1A and 1B, an electric machine 10 is illustrated in accordance with aspects of the present subject matter. For purposes of description only, the electric machine 10 may be configured as an electric motor/generator 12 including a stator 14 and a rotor 16, wherein the relative rotation between the rotor 16 and the stator 14 converts electrical energy to mechanical energy, or mechanical energy to electrical energy. In still further embodiments, the electric machine 10 may be any other type of rotating electric machine, for example, and without limitation, a synchronous machine, a multi-phase electric machine, an electric machine with concentrated windings, an electric machine with distributed windings, a reluctance machine, an induction machine, a wound field machine, a salient pole electric machine, an internal permanent magnet (IPM) machine, an electric machine with permanent magnets arranged differently than an IPM machine (*e.g.,* surface PM machines and/or the like), and/or any other suitable electric machine.

The stator 14 may also include a stator frame 18 and a stator core 20 that may include one or more stator windings 22. The rotor 16 of the electric machine 10 may include a shaft 24 and a rotor core 26 mounted to the shaft 24. The stator 14 is disposed around the rotor 16. The shaft 24 may be driven to rotate about longitudinal axis 28 by, for example, a gas turbine, a steam turbine, a wind turbine, a hydro turbine, an internal combustion engine, or any other suitable device configured to provide a rotational output. The rotor 16 is disposed within stator 14, which is configured to provide a stationary magnetic field. As appreciated, the rotation of the rotor 16 within the stator 14 may generate an electrical current within the stator winding 22, thereby producing an electrical output from the motor/generator 12. Additionally or alternatively, electrical input into the motor/generator 12 may cause rotation of the rotor 16 within the stator 14 thereby producing a mechanical output from the motor/generator 12.

In the illustrated example, the rotor 16 extends within a central opening 30 of the stator core 20 and is rotatable relative to the stator core 20 within the central opening 30. That is, the stator core 20 of the electric machine 10 is sized to extend about the rotor 16 such that the rotor 16 can rotate within the stator 14. In further examples, the rotor 16 may be sized to extend around the stator 14 and rotate around the stator 14.

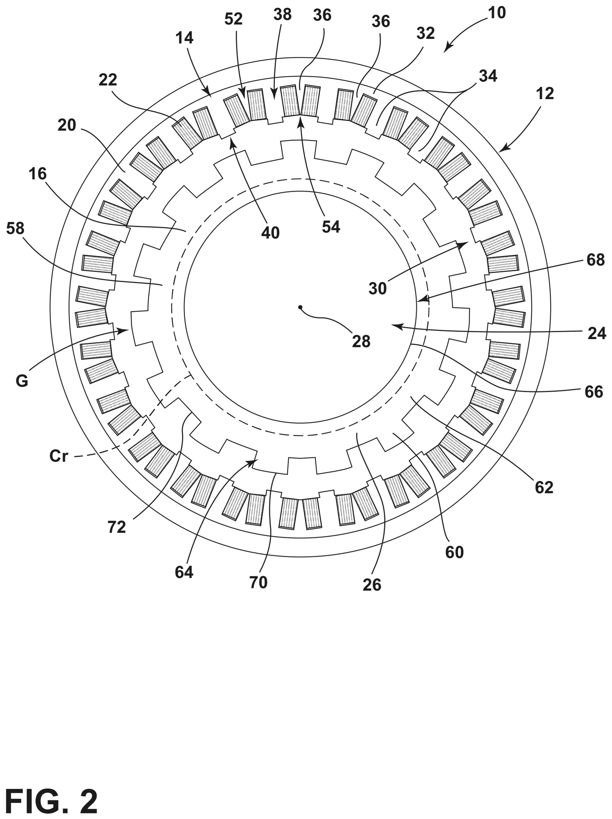

Referring now to FIGS. 2-4, the stator core 20 includes a stator base 32, a plurality of circumferentially-spaced stator teeth 34, and a plurality of circumferentially-spaced partitions 36. In the illustrated example, each stator tooth 34 and partition 36 extends radially inward from the stator base 32. For instance, each stator tooth 34 extends from a first end portion 38 adjacent to the stator base 32 to a second free end portion 40. The second end portion 40 of each stator tooth 34 may partially define the central opening 30 of the stator core 20. In some examples, the second end portions 40 of each stator tooth 34 are connected together. Each stator tooth 34 may also define at least one wedge retention groove 42 proximate to the second end portion 40 thereof. Each wedge retention groove 42 may extend along an axial length of each stator tooth 34 between the axial end sections 44 of the stator core 20. A plurality of wedges 46 are each shaped and sized to be received in, and retained by, a respective pair of wedge retention grooves 42 defined between an adjacent pair of stator teeth 34. Each wedge 46 secures a stator winding 22 within a respective raceway 50.

With further reference to FIGS. 2-4, each partition 36 may extend from a first end portion 52 adjacent to the stator base 32 to a second, free end portion 54. The stator teeth 34 and partitions 36 may be circumferentially spaced about the stator base 32 in an alternating pattern such that a partition 36 is positioned between each pair of circumferentially-adjacent stator teeth 34, and such that a stator tooth 34 is positioned between each pair of circumferentially-adjacent partitions 36. The stator core 20 may include any number of stator teeth 34 and partitions 36.

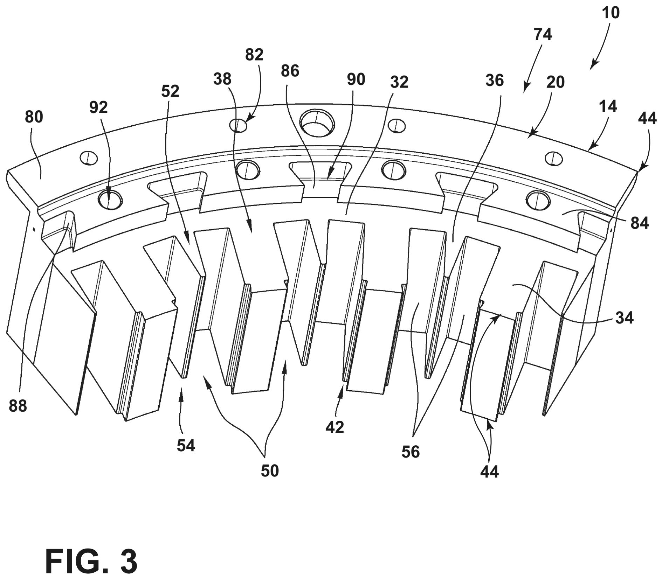

The interior surface of the stator base 32 between each adjacent stator tooth 34 and partition 36 forms a radial inner surface 56 (shown in FIG. 3) of the stator core 20. The raceway 50 is defined in part by the radial inner surface 56, each pair of circumferentially adjacent partitions 36, and the respective stator tooth 34 disposed therebetween. Each raceway 50 is shaped and sized to receive a stator winding 22 therein. Each stator winding 22 extends longitudinally through the stator core 20. The stator core 20 may include the same number of stator windings 22 as raceways 50, or, alternatively, it may include fewer stator windings 22 than raceways 50, such that at least one raceway 50 does not receive a stator winding 22 therein.

Referring still to FIGS. 2-4, the rotor core 26 may be rotatable about the central longitudinal axis 28 relative to the stator 14. In the illustrated example, the rotor core 26 includes a rotor base 58, a plurality of magnetic segments 60 extending radially outward from the rotor base 58, and a plurality of non-magnetic segments 62 extending radially outward from the rotor base 58. In other examples, the plurality of magnetic segments 60 and/or the plurality of non-magnetic segments 62 may extend radially inward from the rotor base 58.

The magnetic segments 60 and the non-magnetic segments 62 are arranged in a circumferentially-spaced alternating pattern of magnetic segments 60 and non-magnetic segments 62 around a rotor circumference Cr of the rotor core 26. In other words, the magnetic segments 60 are spaced radially about the central longitudinal axis 28 such that the magnetic segments 60 are circumferentially spaced a distance therefrom, such that the non-magnetic segments 62 extend between circumferentially-adjacent magnetic segments 60 spaced about the rotor circumference Cr of the rotor core 26. In the illustrated example, the rotor 16 is a toothed rotor wherein the magnetic segments 60 define rotor teeth 64 of the rotor core 26.

The rotor base 58 includes a radial inner rotor surface 66 that defines a central opening 68 within the rotor core 26. An outer circumference of the rotor core 26 is defined by end surfaces 70 of the magnetic segments 60 and the end surfaces 72 of the non-magnetic segments 62. A gap G may be defined between the outer circumference of the rotor core 26 and the second end portion 40 of each stator tooth 34 of the stator core 20. The rotor base 58 may include one or more mortices that are each sized and oriented to receive a corresponding tenon extending from the shaft 24 therein for use in mounting the rotor core 26 to the shaft 24. Other arrangements for mounting the rotor core 26 to the shaft 24 may be provided in addition to, or the alternative to, the mortices and tenons.

The rotor core 26 may be formed from one or more stacks of a plurality of laminations, or alternatively, may be formed as a single piece of material. The rotor base 58 of the rotor core 26 may be fabricated from a non-magnetic material and may be integrally formed with the magnetic segments 60. Alternatively, or additionally, the rotor base 58 may be integrally formed with the non-magnetic segments 62. For example, when the rotor core 26 is formed from a stack of laminations, the rotor base 58 of each lamination, or layer, within the stack may be integrally formed with the magnetic segments 60 and/or the non-magnetic segments 62 of the lamination. Moreover, for example, in embodiments wherein the rotor core 26 is formed as a single piece of material, the rotor base 58 is a single piece of material that is integrally formed from a magnetic material and that includes all of the magnetic segments 60 and non-magnetic segments 62 of the rotor core 26. In the illustrated example, the magnetic segments 60 cooperate with the rotor base 58 to form the rotor 16 as a toothed rotor. In other words, in such an embodiment, the rotor base 58 carries magnetic flux. The toothed rotor structure of the rotor 16, whether constructed from a stack of laminations or a single piece of material, distinguishes the rotor 16 from a "segmented" rotor that includes a rotor core 26 having magnetic segments 60 that are magnetically isolated, or segmented, from the rotor base 58 and each other. In the illustrated example, the stator 14 and/or the rotor 16 may include a permanent magnet. In some alternative examples, the rotor 16 is a segmented rotor.

The rotor core 26 may include any number of magnetic segments 60 and/or non-magnetic segments 62. Moreover, the rotor core 26 may include any number of rotor teeth 64. In some instances, the rotor core 26 includes the same number of rotor teeth 64 as the stator core 20 includes stator teeth 34. Alternatively, the stator core 20 may include more or less stator teeth 34 than the number of rotor teeth 64 included in the rotor core 26.

Referring now to FIGS. 3-5, a wedge portion 74 of an axial end section 44 of the stator core 20 that includes a subassembly 76 is illustrated. The illustrated wedge portion 74 may be representative of any circumferential portion of the stator core 20 at either axial end section 44 thereof, and it is to be understood that each wedge portion 74 included in each axial end section 44 of the stator core 20 may include identical features and components, or may include different features and components than those illustrated in FIGS. 3-5.

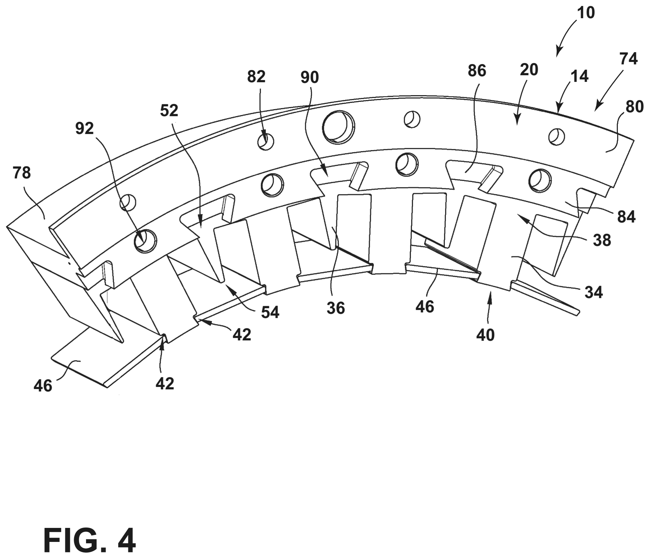

In the illustrated example of FIGS. 3-5, the stator core 20 includes a radial outer surface 78 (FIG. 4) and a flange 80 that circumscribes the stator core 20 and extends radially outward from the radial outer surface 78. In the illustrated example, the flange 80 defines at least one mounting hole 82 therein that is shaped and sized to receive a fastener therethrough. The stator core 20 also includes an exterior surface 84 that may extend substantially perpendicularly from the radial inner surface 56 of the stator core 20. In addition, the stator core 20 may include a plurality of recessed surfaces 86 and a plurality of recess sidewalls 88. Each recess sidewall 88 may extend from the exterior surface 84 to a respective recessed surface 86. Each recessed surface 86 and corresponding recess sidewall 88 define a mounting recess 90 that extends into the stator core 20 from the exterior surface 84. In the illustrated example, each mounting recess 90 is dovetail-shaped. In alternative embodiments, each mounting recess 90 may have any other suitable shape without departing from the teachings provided herein.

The exterior surface 84 may also include a plurality of channels 92 defined therein. In the illustrated example, the channels 92 and mounting recesses 90 are circumferentially spaced about the exterior surface 84 of the stator core 20 such that a channel 92 is defined between each pair of adjacent mounting recesses 90, and such that a mounting recess 90 is defined between each pair of circumferentially-adjacent channels 92. In alternative embodiments, depending on the design of stator core 20, at least some circumferentially-spaced pairs of mounting recesses 90 do not include a channel 92 defined between them.

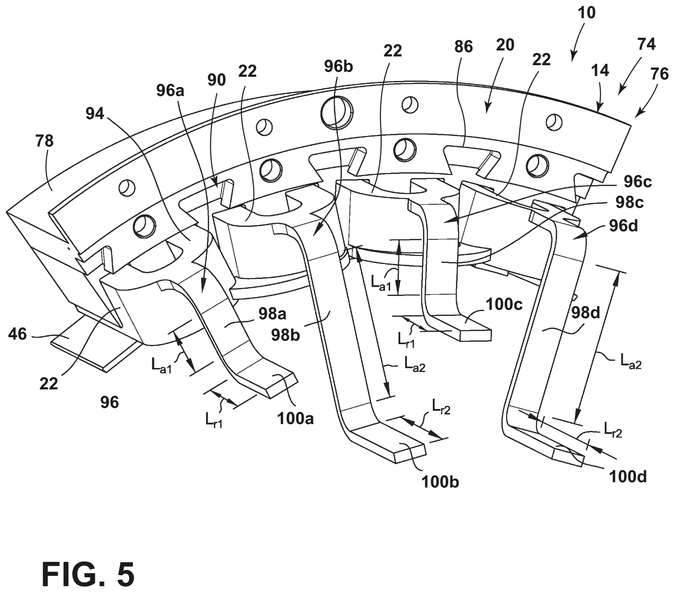

With further reference to FIG. 5, a plurality of stator windings 22 may be received within a respective raceway 50 (shown in FIG. 2). In the illustrated example, the stator winding 22 is formed by wrapping a plurality of wires about one of the stator teeth 34 and between adjacent partitions 36 in a raceway configuration. That is, the wires enable the stator winding 22 to extend longitudinally through the stator core 20 in a direction that is substantially parallel to the central longitudinal axis 28. Moreover, the wires are looped around both lateral sides of the stator tooth 34 and around an end portion of the stator tooth 34 at each axial end section 44 of the stator core 20. The plurality of wedges 46 secure each respective stator winding 22 within a respective raceway 50.

In some embodiments, the stator windings 22 may include one or more direct current (DC) windings and/or one or more alternative current (AC) windings. In other embodiments, the stator windings 22 may include copper windings, Litz wire windings, fractional-slot concentrated windings, and/or any other suitable type of stator winding. Each stator winding 22 may be, or may represent, any number of phases, such as, but not limited to, a single phase or three phases. In further embodiments, the stator winding 22 may be a rigid conductor having a similar shape.

The portion of each stator winding 22 that loops around the end portion of the stator tooth 34 forms an end winding portion 94 that extends outward from the axial end section 44 of the stator core 20. End portions of the plurality of wires that form each stator winding 22 may extend axially outward from the end winding portion 94 to form a lead 96. The plurality of wires in each lead 96 may be brazed together to form a solid, unitary lead, or they may be loosely bundled together. In some embodiments, each lead 96 is flexible and can be bent and/or manipulated into multiple configurations or orientations. In further embodiments, the lead 96 is rigid and fixed in a single configuration.

The wedge portion 74 illustrated in FIG. 5 includes four end winding portions 94 with first, second, third, and fourth leads 96a-96d. Each lead 96a-d includes a radial portion 98a-d that extends radially inwardly towards the central longitudinal axis 28, and an axial portion 100a-d that extends axially away from the stator core 20 such that each portion 66a-d is substantially parallel to the central longitudinal axis 28. In the illustrated example, the first and third leads 96a and 96c are formed identically, and the second and fourth leads 96b and 96d are formed identically with dimensions that are different from those of 96a and 96c. That is, the radial portions 65a and 65c of the respective first and third leads 96a and 96c each have a first radial length Lᵣ₁, and the radial portions 65b and 65d of the respective second and fourth leads 96b and 96d each have a second radial length Lᵣ₂ that is longer than the first radial length Lᵣ₁. Similarly, the axial portions 66a and 66c of the respective first lead 96a and the third lead 96c have a first axial length Lₐ₁, and the axial portion 100b of the respective second lead 96 b and the axial portion 100d of the fourth lead 96d have a second axial length Lₐ₂ that is longer than the first axial length Lₐ₁. In other embodiments, all leads 96a-96 d may have substantially the same dimensions or may be varied from each other in any other manner.

In some embodiments, the stator core 20 also includes a plurality of slot liners that are sized and oriented to be received within a corresponding raceway 50. The slot liners may be constructed from a nonconductive material such that the stator windings 22 are electrically isolated from the stator core 20. Each slot liner may be positioned between the radial inner surface 56 of the stator core 20 and a stator winding 22, and may extend longitudinally between the axial end portions of the stator core 20.

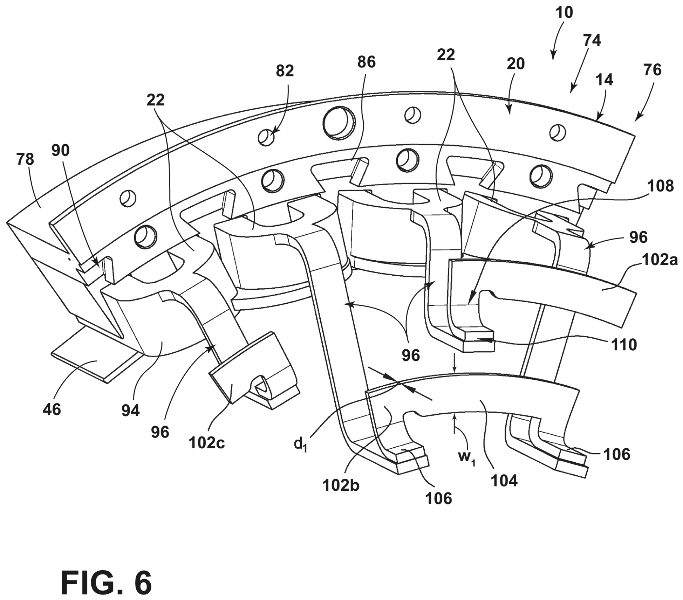

Referring now to FIG. 6, the electric machine 10 may also include at least one busbar 102 that is electrically coupled to at least two leads 96. In the illustrated example, three busbars 102a-c are illustrated, but the electric machine 10 may include any suitable number of busbars 102 that enables the electric machine 10 to function as described herein. Each busbar 102 may include an arcuately-shaped circumferential portion 104 and at least two axial tabs 106. Each circumferential portion 104 has a depth d₁ and a width w₁ and extends a first arcuate length that enables busbar 102 to extend between a pair of axial tabs 106. In other embodiments, the circumferential portion 104 may extend circumferentially beyond one or both of the axial tabs 106. Moreover, the circumferential portion 104 may extend substantially linearly between the at least two axial tabs 106, or alternatively, it may be formed with a radius of curvature. In other embodiments, the circumferential portion 104 may form a fully annular ring such that the first arcuate length AL₁ is a full circumference defined by the circumferential portion 104. In still other embodiments, the circumferential portion 104 may be semicircular.

Each axial tab 106 may extend from a first end portion 108 connected to the circumferential portion 104 to a second, free end portion 110. More specifically, in the illustrated example, each axial tab 106 extends radially inwardly from the first end portion 108 to the second end portion 110. In other embodiments, axial tabs 106 may extend in any other suitable direction without departing from the teachings provided herein. In the illustrated example, the portion of the axial tab 106 adjacent to the first end portion 108 is substantially flush with the circumferential portion 104, and the portion of the axial tab 106 adjacent to the second end portion 110 may be substantially perpendicular to the circumferential portion 104. In further embodiments, the first end portion 108 and the second end portion 110 may both be substantially flush with the circumferential portion 104, or the first end portion 108 and the second end portion 110 may both extend substantially perpendicularly to the circumferential portion 104.

In the illustrated example, each axial tab 106 is coupled to the axial portion 100 of one of the plurality of leads 96 such that each busbar 102 is electrically coupled to at least two leads 96. In other embodiments, the busbar 102 and the leads 96 may be coupled together in any other suitable way, for example, by coupling the axial tab 106 to the radial portion 98 of the lead 96. In still further embodiments, the busbar 102 may not include any axial tabs 106, and the circumferential portion 104 is coupled to at least two leads 96. The busbar 102 may be brazed to each lead 96 or may be coupled in any other suitable manner. In the illustrated example, a single busbar 102 is coupled to each lead 96. In other embodiments, more than one busbar 102 may be coupled to each lead 96.

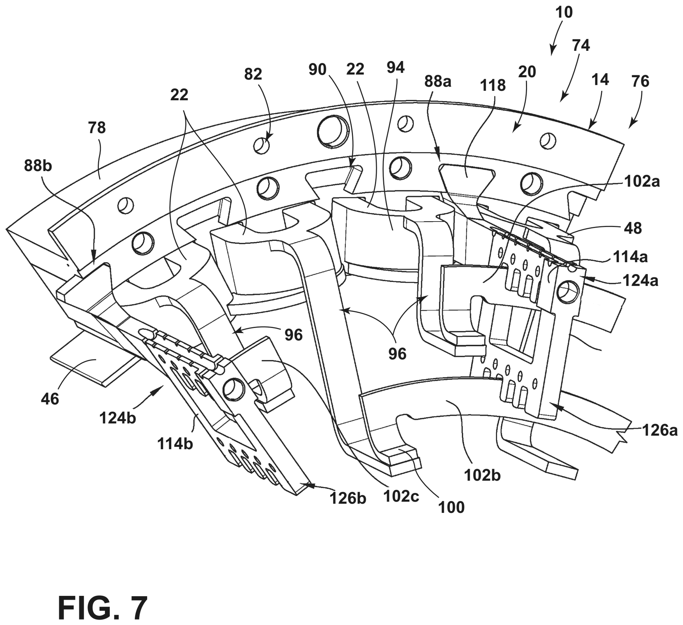

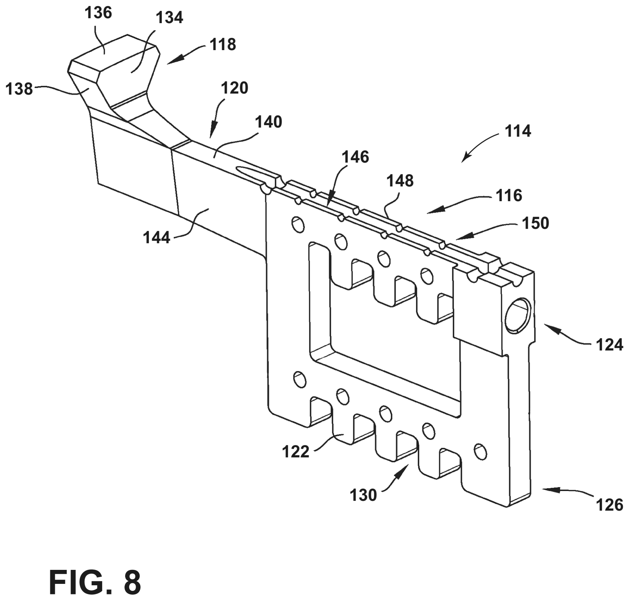

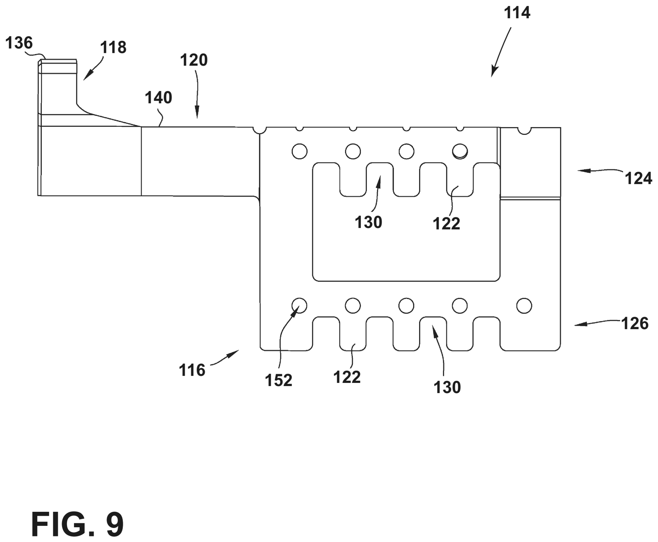

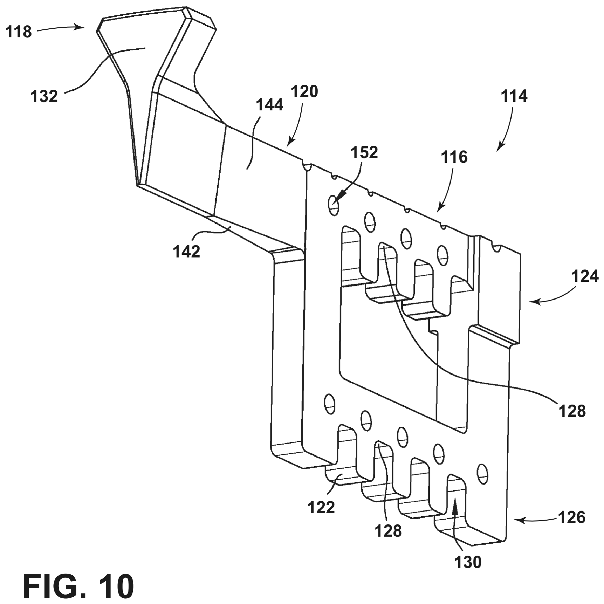

With reference to FIGS. 7-10, in some examples, the electric machine 10 may also include at least one bracket 114 that provides mechanical support to the at least one busbar 102. The bracket 114 may be positioned within the mounting recesses 90 (shown in FIG. 4). In the illustrated example, a first bracket 114a is received in a first mounting recess 90a, and a second bracket 114b is received in a second mounting recess 90b.

In various examples, each bracket 114 may include a comb portion 116, a tab 118, and an arm 120 that extends between the comb portion 116 and the tab 118. In some cases, the comb portion 116 is offset from the tab 118. The comb portion 116 may include a plurality of teeth 122. For example, each bracket 114 may include a first, upper row 124 of teeth 122 and a second, lower row 126 of teeth 122. In other embodiments, the comb portion 116 may include any other suitable number of rows, for example, and without limitation, only one row of teeth 122, or more than two rows of teeth 122.

Each of the plurality of teeth 122 may extend substantially perpendicularly downward from the lower surface 128 of each of the first row 124 of teeth 122 and/or the second row 126 of teeth 122. An indentation 130 may be defined between each pair of adjacent teeth 122. Each of the first row 124 of teeth 122 and/or the second row 126 of teeth 122 of the comb portion 116 may include at least two teeth 122 that define an indentation 130 therebetween. Each indentation 130 may be sized and shaped to receive a portion of the busbar 102 therein. More specifically, in the illustrated example, each indentation 130 is sized and shaped to receive part of the circumferential portion 104 of the busbar 102 therein. Moreover, in some instances, not every indentation 130 of the bracket 114 receives a portion of a busbar 102. For instance, in the illustrated example, at least some indentations 125 may remain empty and not receive a portion of a busbar 102. For example, the first bracket 114a receives a portion of a first busbar 102a in an indentation 130 defined in an upper row 124a thereof, and a portion of a second busbar 102b is received in an indentation 130 defined in a lower row 126b thereof. Similarly, the second bracket 114 b receives a portion of a third busbar 102c in an indentation 130 defined in an upper row 124b thereof. In the illustrated example, no other indentations 125 receive a portion of a busbar 102.

Each bracket 114 may also include a tab 118 formed by an interior face 132, an exterior face 134, an upper face 136, and a plurality of lateral faces 138. In the illustrated example, the interior face 132 is substantially parallel to the exterior face 134. Additionally or alternatively, the upper face 136 may be substantially perpendicular to the interior face 132 and/or the exterior face 134. In alternative embodiments, the interior face 132, exterior face 134, and upper face 136 may be formed with any other suitable orientation relative to one another. Each tab 118 may be shaped and sized to be received within a respective mounting recess 90 in the stator core 20. For example, if the mounting recesses 90 are dovetail-shaped recesses, then the tab 118 is formed as a dovetail-shaped tab. In alternative embodiments, any other suitable mechanical coupling feature may be used to couple the bracket 114 to the stator core 20.

In various examples, each tab 118 may be received in a mounting recess 90 such that the interior face 132 engages with the recessed surface 86 of the stator core 20, and such that each of the upper face 136 and the lateral faces 138 engages with one of the plurality of recess sidewalls 88 defined within the stator core 20.

With further reference to FIGS. 7-10, each bracket 114 may additionally include an arm 120 that extends between the tab 118 and the comb portion 116. In various examples, the arm 120 may include an upper surface 140, a lower surface 142, and a pair of opposing lateral surfaces 144 extending between the upper surface 140 and the lower surface 142.

In various examples, the bracket 114 may additionally or alternatively include an instrumentation routing groove 146 defined along the upper surface 148 of the upper row 124 of teeth 122. In the illustrated example, the instrumentation routing groove 146 extends along the comb portion 116 and the arm 120. The instrumentation routing groove 146 may be shaped and sized to receive one or more sensors therein such that the sensors extend generally axially through the electric machine 10. Such sensors may be, for example, and without limitation, thermocouples or other temperature sensors. In several examples, the bracket 114 may additionally include at least one instrumentation turning groove 150 defined in the upper surface 148 of the upper row 124 of the teeth 122. The instrumentation turning groove 150 may extend along the upper surface 148 and may at least partially intersect the instrumentation routing groove 146. Each instrumentation turning groove 150 may be shaped and sized to at least partially receive one of the one or more sensors received in the instrumentation routing groove 146 such that the sensor can be rerouted from the axial direction to a circumferential direction. The illustrated example illustrates grooves of two different sizes, but further embodiments may include only grooves of the same size, or grooves of multiple different sizes.

Referring still to FIGS. 7-10, the bracket 114 may further include at least one restraining aperture 152 defined therein that extends through the comb portion 116, and/or any other portion of the bracket 114. Each restraining aperture 152 may be shaped and sized to receive a restraining strap therein. In the illustrated example, each row 126 of the comb portion 116 includes four restraining apertures 152, but each row 126 may include any other suitable number of restraining apertures 152, for example, and without limitation, more than four restraining apertures 152 or less than four restraining apertures 152.

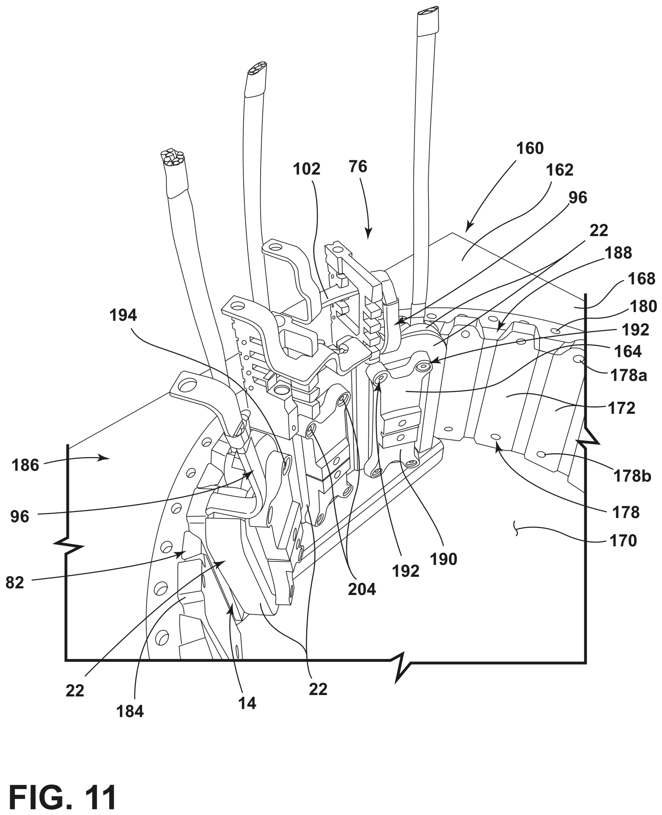

Referring now to FIGS. 11-15, in various examples, a system 160 may be implemented to assist in forming a subassembly 76 of the electric machine 10 before installation within the stator core 20. For example, the system 160 may include a fixture 162, one or more coil carriers 164, and/or an anchor 166 to attach one or more stator windings 22, the one or more brackets 114, and/or the one or busbars 102 to one another before the aforementioned components are installed in the stator core 20. In various examples, each of the stator windings 22, the brackets 114, and/or the busbars 102 implemented within the electric machine 10 may be preassembled as a subassembly 76 within the system 160 before being installed within the stator core 20. Additionally or alternatively, a portion of the stator windings 22, the brackets 114, and/or the busbars 102 implemented within the electric machine 10 may be preassembled as a subassembly 76 within the system 160 before being installed within the stator core 20. The system 160 disclosed herein may allow for a more compact electric machine 10 with reduced housing size and weight and/or a spacing between active electrical components to be reduced based on electrical clearances (voltage level) as opposed to mechanical considerations and in situ space requirements for manufacturing processes (e.g., induction brazing).

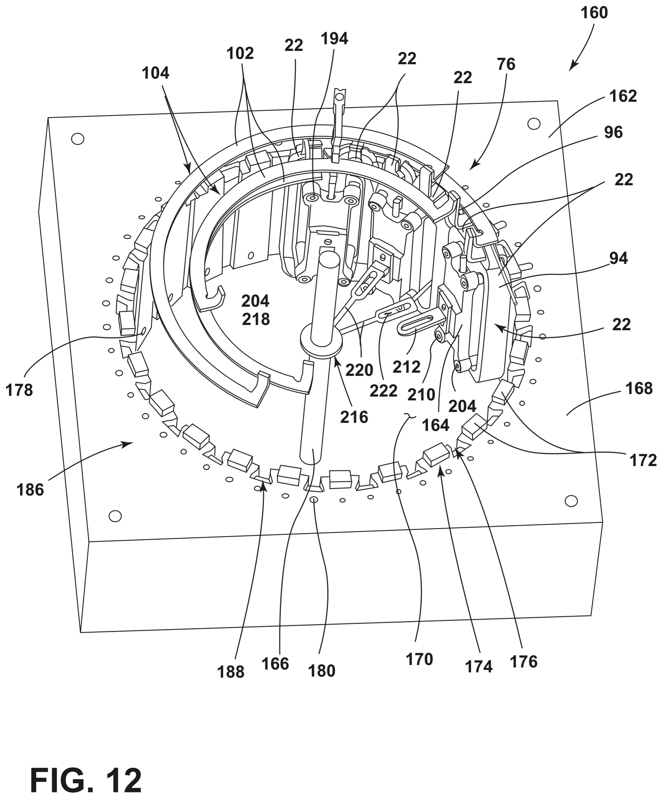

As illustrated in FIGS. 11 and 12, the fixture 162 may include a fixture base 168 that may define a cavity 170. The cavity 170 may be defined by a cavity diameter, which may be generally equal to a stator core diameter. However, the cavity 170 may be of any size and geometry without departing from the teachings provided herein. As illustrated in FIGS. 11 and 12, the fixture base 168 may include a plurality of circumferentially spaced fixture teeth 172. In the illustrated example, each fixture tooth 172 extends radially inward from the fixture base 168. For instance, each fixture tooth 172 extends from a first end portion 174 adjacent to the fixture base 168 to a second free end portion 176. The second end portion 40 of each fixture tooth 172 may partially define the cavity 170 of the fixture base 168.

As illustrated, the fixture tooth 172 may define one or more fastening voids 178. For instance, in the example illustrated in FIGS. 11 and 12, the fixture teeth 172 may define a first fastening void 178a that extends radially outward into the fixture base 168. The fixture teeth 172 may further define a second fastening void 178b that extends radially outward into the fixture base 168 with the second fastening void 178b being axially offset from the first fastening void 178a. In various examples, each of the first fastening void 178a and/or the second fastening void 178b may include fastening features therein. For instance, each of the first fastening void 178a and/or the second fastening void 178b may have threads within each respective void that allow for selective fixation of a component thereto.

In the illustrated example of FIGS. 11 and 12, the fixture base 168 may further define at least one mounting hole 180 therein that is shaped and sized to receive a fastener therethrough. In addition, the fixture base 168 may define a plurality of recessed surfaces 182 and a plurality of recess sidewalls 184. Each recess sidewall 184 may extend from an exterior surface 186 of the fixture base 168 to a respective recessed surface 182. Each recessed surface 182 and corresponding recess sidewall 184 define a mounting recess 188 that extends into the fixture base 168 from the exterior surface 186. In the illustrated example, each mounting recess 188 is dovetail-shaped. In alternative embodiments, each mounting recess 188 may have any other suitable shape without departing from the teachings provided herein.

Referring now to FIGS. 11-13, as provided herein, one or more stator windings 22, which may be, or may represent, any number of phases, such as, but not limited to, a single phase or three phases, may be installed along the stator core 20. The stator windings 22 may be operably coupled with one or more busbars 102 that are electrically coupled to at least two leads 96. In the illustrated example of FIG. 12, three busbars 102a-c are illustrated, but the electric machine 10 may include any suitable number of busbars 102 that enables the electric machine 10 to function as described herein. The electric machine 10 may also include at least one bracket 114 that provides mechanical support to the at least one busbar 102 and/or any other component.

In various examples, each stator winding 22, bracket 114, and/or busbar 102 may be an individual component before assembly. To assist in assembling each of these components into one another, the system 160 may further include a coil carrier 164. The coil carrier 164 may include a carrier body 190 that defines one or more fastener openings 192 through the carrier body 190. In the illustrated example, the carrier body 190 of the coil carrier 164 includes four fastener openings 192. However, the carrier body 190 may include any number of openings without departing from the scope of the present disclosure.

Referring further to FIGS. 11-13, one or more fasteners 194 may be positioned through the one or more fastener openings 192. The one or more fasteners 194 may be configured in any manner without departing from the teachings provided herein. In various examples, the fastener 194 may include a first segment 196 having a first end section 198 that is selectively retained by the carrier body 190 of the coil carrier 164 and/or is positioned through a fastener opening 192 of the carrier body 190. The first segment 196 of the fastener 194 further includes a second end section 200 that extends away from the carrier body 190 of the coil carrier 164. In various examples, the first segment 196 may be configured as a boss, a dowel, and/or any other practicable device.

Additionally, the fastener 194 may include a second segment 202 that extends from the second end section 200 of the first segment 196. In some cases, a length of the second segment 202 that is external to the first segment 196 may be adjustable, such as through the manipulation of a head 204 of the fastener 194, which may be located at the first end section 198 of the fastener 194. Additionally or alternatively, the second segment 202 of the fastener 194 may include threads thereof that correspond to the threads within the fastening voids 178 of the fixture 162. As such, the second segment 202 of the fastener 194 may be selectively retained within the fastening voids 178.

In various examples, a first fastener 194a and a second fastener 194b may be operably coupled with the carrier body 190 of the coil carrier 164. The first segment 196 of the first fastener 194a and the first segment 196 of the second fastener 194b may be positioned through an opening 206 defined by a first stator winding 22a. The second segment 202 of the first fastener 194a may be positioned within a first fastening void 178a on a first fixture tooth 172a and the second segment 202 of the second fastener 194b may be positioned within a second fastening void 178b on the first fixture tooth 172a. As provided herein, through manipulation of a head 204 of the fastener 194, or any other method, the second segment 202 of the first fastener 194a may be adjusted, or movable, relative to the first segment 196 of the first segment 196, and/or the second segment 202 of the second fastener 194b may be adjusted relative to the first segment 196 of the second segment 202. The adjustment of the second segment 202 of the first fastener 194a and/or the adjustment of the second segment 202 of the second fastener 194b may extend the respective second segments 202 into the respective fastener voids 178a, 178b. In such instances, the first stator winding 22a may be selectively affixed to the fixture 162 through the coil carrier 164.

Additionally or alternatively, a third fastener 178c and a fourth fastener 178d may be operably coupled with the carrier body 190 of the coil carrier 164. The first segment 196 of the third fastener 194c and the first segment 196 of the fourth fastener 194d may be positioned through an opening 206 defined by a second stator winding 22b. The second stator winding 22b may be configured to be adjacent to the first stator winding 22a. The second segment 202 of the third fastener 194c may be positioned within a first fastening void 178a on a second fixture tooth 172b and the second segment 202 of the fourth fastener 194d may be positioned within a second fastening void 178b on the second fixture tooth 172b. As provided herein, through manipulation of a head 204 of the fastener 194, or any other method, the second segment 202 of the third fastener 194c may be adjusted relative to the first segment 196 of the first segment 196, and/or the second segment 202 of the fourth fastener 194d may be adjusted relative to the first segment 196 of the second segment 202. The adjustment of the second segment 202 of the third fastener 194c and/or the adjustment of the second segment 202 of the fourth fastener 194d may extend the respective second segment 202s into the respective fastener voids 178a, 178b. In such instances, the first stator winding 22a and the second stator winding 22b may both be selectively affixed to the fixture 162 through a common coil carrier 164. The third fastener may generally be referred to as the first fastener for the second stator winding, and the fourth fastener may generally be referred to as the second fastener for the second stator winding.

With further reference to FIGS. 11-13, the coil carrier 164 may further include a mount 208 that is positioned on a radially inward portion of the coil carrier 164. The mount 208 may be configured to operably couple one or more carriers 164 to the anchor 166. The coupling of the one or more carriers 164 to the anchor 166 may allow for the transport of the subassembly 76 and/or to assist with the installation of such components within the electric machine 10. In various examples, the mount 208 may include a securement section 210 that attaches to the carrier body 190 of the coil carrier 164. In some cases, the securement section 210 may be attached to the coil carrier 164 through one or more fasteners, adhesives, and/or through any other manner. Additionally or alternatively, various sections of the mount 208 may be integrally formed with any other portion of the coil carrier 164. A protrusion 212 may extend radially inward from the securement section 210. The protrusion 212 may extend from the securement section 210 at any angle relative to the securement section 210. In various examples, the protrusion 212 may define a protrusion slot 214.

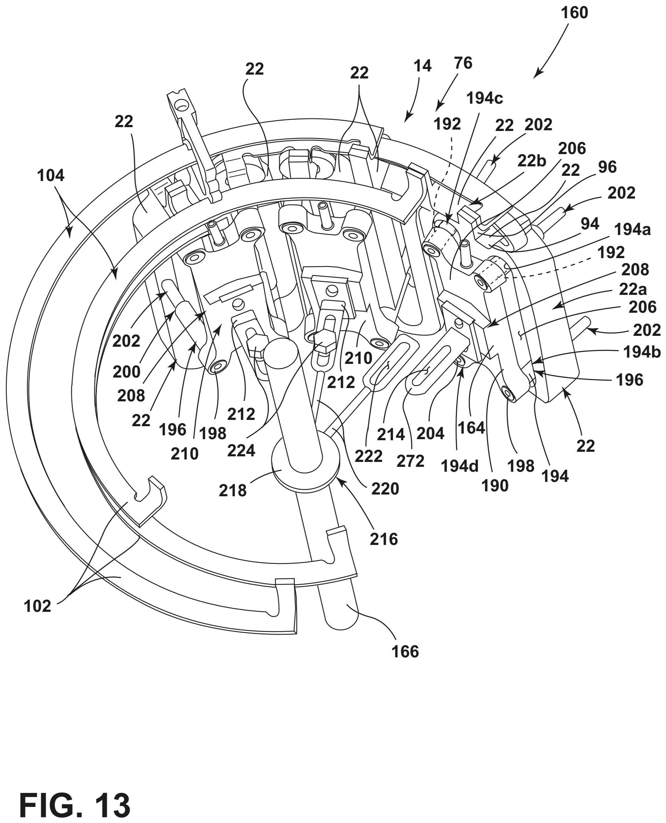

In various examples, the system 160 may further include a brace 216. The brace 216 may include an anchor portion 218 that is operably coupled with the anchor 166. In some instances, such as those illustrated in FIGS. 12 and 13, the anchor portion 218 may surround the anchor 166 and include one or more flanges 220 that extend from the anchor portion 218. Each of the flanges 220 may define a flange slot 222. In operation, the protrusion slot 214 may be aligned with the flange slot 222 and a retainer 224 may be positioned through each of the protrusion slot 214 and the flange slot 222. The retainer 224 may be configured to maintain a relative position of the flange slot 222 to the protrusion slot 214, a relative position of the retainer 224 relative to the flange slot 222, and/or a relative position of the retainer 224 relative to the protrusion slot 214. As such, the brace 216, the mount 208, and/or the retainer 224, singly or in any combination, may be configured to maintain a defined distance between the anchor 166 and the coil carrier 164.

In some instances, once each of the carriers 164 is attached to the anchor 166, such as via the brace 216 and/or the mount 208, the second segment 202 of each fastener 194 may be removed from their respective fastener void 178, which may release the electric machine subassembly 76 from the fixture 162. The subassembly 76, which may include the stator windings 22, the bracket 114, the busbars 102, and/or any other component, may then be placed in a defined position within the electric machine 10.

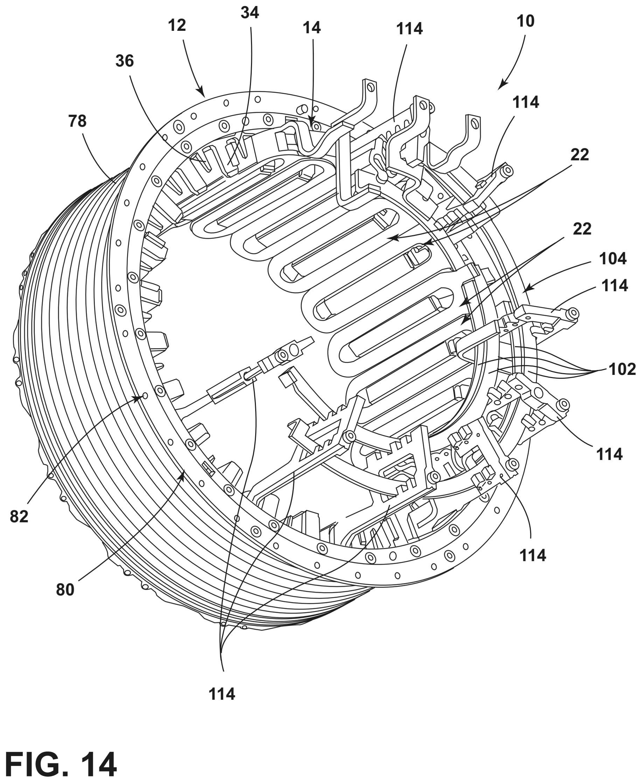

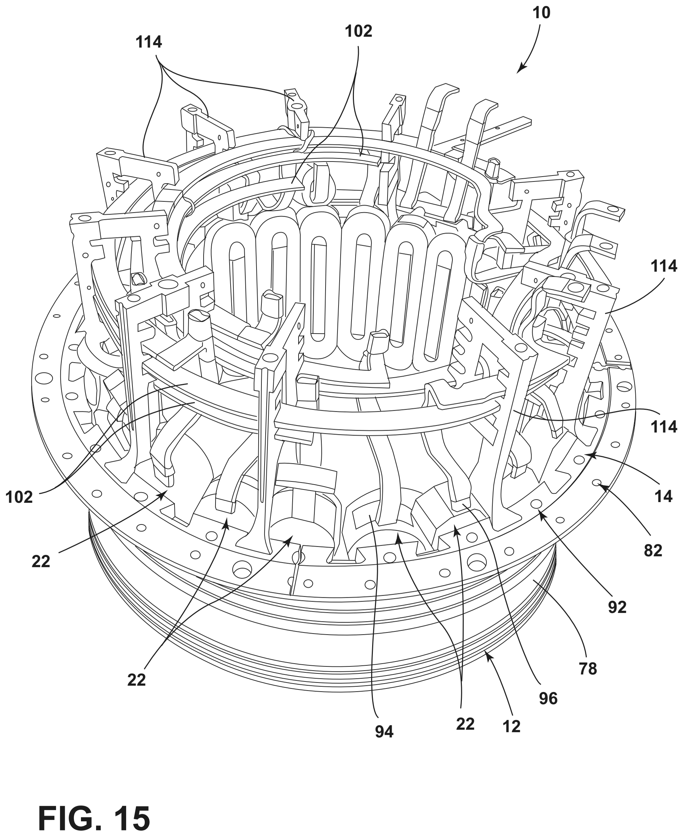

Referring now to FIGS. 14 and 15, once positioned within the electric machine 10, each of the carriers 164 may be released from the brace 216 and/or the stator windings 22, thereby placing the subassembly 76 within the electric machine 10. In various examples, the anchor 166 may be manipulated, which, in turn, may alter a position of the carriers 164 and/or the stator windings 22 relative to one another. The manipulation of the anchor 166 may allow for adjustment of the subassembly 76 within the electric machine 10. For example, the adjustment of the subassembly 76 may allow for each of the windings to be positioned within a respective raceway 50 of the stator core 20.

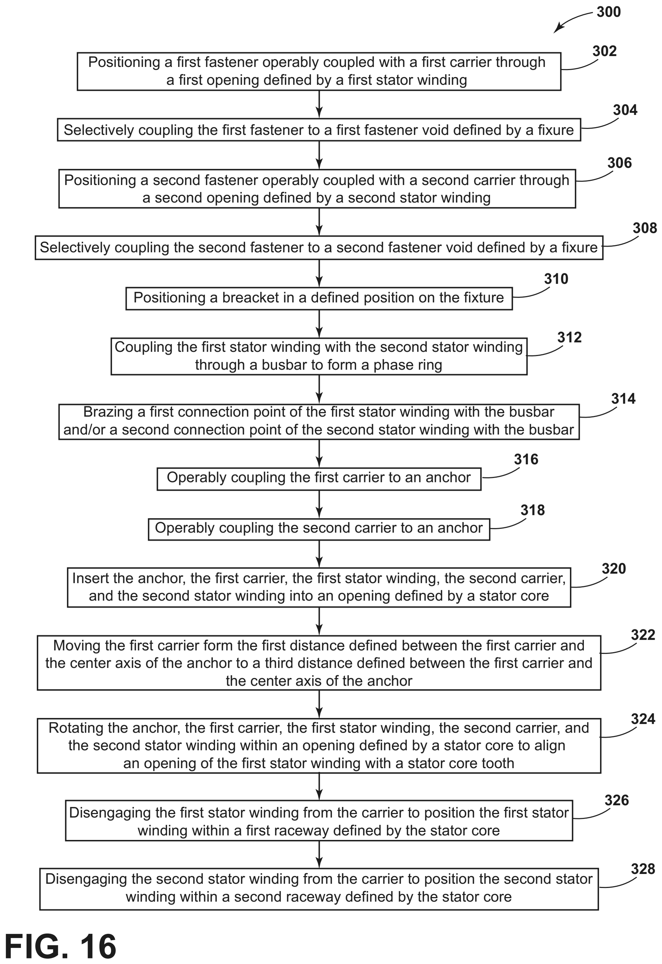

Referring now to FIG. 16, a flow diagram of some embodiments of a method 300 for assembling an electric machine is illustrated in accordance with aspects of the present subject matter. In general, the method 300 will be described herein with reference to the electric machine 10 described above with reference to FIGS. 1-15. However, it will be appreciated by those of ordinary skill in the art that the disclosed method 300 may generally be utilized with any electric machine and/or may be utilized in connection with a system having any other suitable system configuration. In addition, although FIG. 16 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 16, at (302), the method 300 can include positioning a first fastener operably coupled with a first coil carrier through a first opening defined by a first stator winding. In addition, at (304), the method 300 can include selectively coupling the first fastener to a first fastener void defined by a fixture. As provided herein, the fixture may include a fixture base 168 that may define a cavity. The cavity may be defined by a cavity diameter, which may be generally equal to a stator core diameter. However, the cavity may be of any size and geometry without departing from the teachings provided herein. In some cases, the fixture base may include a plurality of circumferentially offset fixture teeth. The fixture tooth may extend radially inward from the fixture base. Moreover, the fixture teeth may define one or more fastening voids. For instance, the fixture teeth may define a first fastening void that extends radially outward into the fixture base. The fixture teeth may further define a second fastening void that extends radially outward into the fixture base with the second fastening void being axially offset from the first fastening void. In various examples, each of the first fastening void and/or the second fastening void may include fastening features therein. For instance, each of the first fastening void and/or the second fastening void may have threads within each respective void that allow for selective fixation of a component thereto.

The coil carrier may be a multi-piece tool that utilizes one or more fasteners that may include a first segment and/or a second segment to retain a stator winding to the tool during handling as well as while on the fixture itself.

At (306), the method 300 can include positioning a second fastener operably coupled with a second coil carrier through a second opening defined by a second stator winding. At (308), the method 300 can include selectively coupling the second fastener to a second fastener void defined by the fixture. By attaching the first stator winding and/or the second stator winding to the fixture, the first stator winding and/or the second stator winding may be located axially and radially with respect to a fixed datum on the electric machine as well as circumferentially (clock position) relative to each other and any end winding connection point. The fixture may be a complete 360-degree representation of the actual stator core or an arc segment. The fixture can affix the first stator winding and/or the second stator winding on the inner diameter by mimicking the stator core bottom of slot geometry, Alternatively, the fixture can affix the first stator winding and/or the second stator winding on its outer diameter by mimicking the stator top of slot geometry. Additionally or alternatively, the fixture can also be flat/straight assuming the coil lead lengths and phase connections are flexible and accounted for during assembly of the electric machine.

At (310), the method 300 can include positioning a bracket in a defined position on the fixture. The bracket may provide mechanical support to at least one busbar operably coupled with the first stator winding and/or the second stator winding. The bracket may be positioned within a mounting recess of the fixture, which may generally align with a similar recess in a stator core. In some cases, the bracket, and/or any other component, may retain a busbar or a phase ring in space at the proper location. Once the busbars or the phase rings are located in a defined position, the lead of the first stator winding and/or the second stator winding can be terminated at each point in preparation for the final electrical connections. In this instance, the lead of the first stator winding and/or the second stator winding may be mechanically connected to a phase ring tab using a crimped ferrule connection.

At (312), the method 300 can include coupling the first stator winding with the second stator winding through a busbar to form a phase ring. A portion of the busbar extends through the bracket. At (314), the method 300 can include brazing a first connection point of the first stator winding with the busbar and/or a second connection point of the second stator winding with the busbar.

At (316), the method 300 can include operably coupling the first coil carrier to an anchor, the first coil carrier positioned a first distance from a center axis of the anchor. Similarly, at (318), the method 300 can include operably coupling the second coil carrier to an anchor, the second coil carrier positioned a second distance from a center axis of the anchor. In some cases, operably coupling the first coil carrier to the anchor may further include operably coupling a first mount of the first coil carrier with a first flange of a brace of the anchor. Additionally or alternatively, operably coupling the second coil carrier to the anchor may further include operably coupling a second mount of the second coil carrier with a second flange of the brace of the anchor.

At (320), the method 300 can include inserting the anchor, the first coil carrier, the first stator winding, the second coil carrier, and the second stator winding into an opening defined by a stator core. At (322), the method 300 can include moving the first coil carrier from the first distance defined between the first coil carrier and the center axis of the anchor to a third distance defined between the first coil carrier and the center axis of the anchor, the third distance less than the first distance. Further, at (324), the method 300 can include rotating the anchor, the first coil carrier, the first stator winding, the second coil carrier, and the second stator winding within an opening defined by a stator core to align an opening of the first stator winding with a stator core tooth.

At (326), the method 300 can include disengaging the first stator winding from the coil carrier to position the first stator winding within a first raceway defined by the stator core. Similarly, at (328), the method 300 can include disengaging the second stator winding from the coil carrier to position the second stator winding within a second raceway defined by the stator core.

This written description uses examples to disclose the technology, including the best mode, and also to enable any person skilled in the art to practice the technology, including making and using any devices or systems and performing any incorporated methods. The scope of the invention as herein claimed is defined by the appended claims and may include other examples not illustrated by the above-described exemplary embodiments that occur to those skilled in the art. Such other examples are intended to be within the scope of the claims if they include structural elements that do not differ from the literal language of the claims, or if they include equivalent structural elements with insubstantial differences from the literal language of the claims.

Further aspects of the invention are provided by the subject matter of the following clauses:
A system for an electric machine, the system comprising: a fixture including a fixture base defining a first fixture tooth, wherein a first fastening void is defined by the first fixture tooth, the first fastening void extending into the fixture base; a first stator winding defining a first opening therethrough; a coil carrier defining a carrier body; and a first fastener including a first segment selectively retained by the carrier body and positioned through the first opening defined by the first stator winding and a second segment configured to be positioned within the first fastening void.

The system/method of one or more of these clauses and/or any of the appended claims, wherein a second fastening void is defined by the first fixture tooth, the second fastening void extending into the fixture base in an offset location relative to the first fastening void.

The system/method of one or more of these clauses and/or any of the appended claims, further comprising: a second fastener including a first segment selectively retained by the carrier body and positioned through the first opening defined by the first stator winding and a second segment configured to be positioned within the second fastening void.

The system/method of one or more of these clauses and/or any of the appended claims, wherein the fixture base defines a second fixture tooth circumferentially offset from the first fixture tooth, and wherein a first fastening void of the second fixture tooth is defined by the second fixture tooth, the second fastening void extending into the fixture base in an offset location relative to the first fastening void.

The system/method of one or more of these clauses and/or any of the appended claims, further comprising: a second stator winding defining a second opening therethrough, the second stator winding circumferentially offset from the first stator winding; and a first fastener for the second stator winding including a first segment selectively retained by the carrier body and positioned through the second opening defined by the second stator winding and a second segment configured to be positioned within the first fastening void of the second fixture tooth.

The system/method of one or more of these clauses and/or any of the appended claims, wherein a second fastening void of the second fixture tooth is defined by the second fixture tooth, the second fastening void of the second fixture tooth extending into the fixture base in an offset location relative to the first fastening void of the second fixture tooth.

The system/method of one or more of these clauses and/or any of the appended claims, further comprising: a second fastener for the second stator winding including a first segment selectively retained by the carrier body and positioned through the second opening defined by the second stator winding and a second segment configured to be positioned within the second fastening void of the second fixture tooth.

The system/method of one or more of these clauses and/or any of the appended claims, further comprising: an anchor; and a brace operably coupled with the anchor and the coil carrier, wherein the brace is configured to maintain a defined distance between the anchor and the coil carrier.

The system/method of one or more of these clauses and/or any of the appended claims, further comprising: an anchor; and a mount operably coupled with the coil carrier, the mount configured to maintain a defined distance between the anchor and the coil carrier.

The system/method of one or more of these clauses and/or any of the appended claims, further comprising: an anchor; a brace operably coupled with the anchor, the brace including a flange, wherein the flange defines a flange slot; a mount operably coupled with the coil carrier, the mount including a protrusion, wherein the protrusion defines a protrusion slot; and a retainer configured to be positioned through the flange slot and the protrusion slot to maintain a defined distance between the anchor and the coil carrier.

A method for assembling an electric machine, the method comprising: positioning a first fastener operably coupled with a first coil carrier through a first opening defined by a first stator winding; selectively coupling the first fastener to a first fastener void defined by a fixture; positioning a second fastener operably coupled with a second coil carrier through a second opening defined by a second stator winding; selectively coupling the second fastener to a second fastener void defined by the fixture; positioning a bracket in a defined position on the fixture; coupling the first stator winding with the second stator winding through a busbar to form a phase ring, wherein a portion of the busbar extends through the bracket; brazing a first connection point of the first stator winding with the busbar; and brazing a second connection point of the second stator winding with the busbar.

The system/method of one or more of these clauses and/or any of the appended claims, further comprising: operably coupling the first coil carrier to an anchor, the first coil carrier positioned a first distance from a center axis of the anchor; and operably coupling the second coil carrier to an anchor, the second coil carrier positioned a second distance from a center axis of the anchor.

The system/method of one or more of these clauses and/or any of the appended claims, wherein operably coupling the first coil carrier to the anchor further comprises operably coupling a first mount of the first coil carrier with a first flange of a brace of the anchor, and wherein operably coupling the second coil carrier to the anchor further comprises operably coupling a second mount of the second coil carrier with a second flange of the brace of the anchor.

The system/method of one or more of these clauses and/or any of the appended claims, further comprising: inserting the anchor, the first coil carrier, the first stator winding, the second coil carrier, and the second stator winding into an opening defined by a stator core.

The system/method of one or more of these clauses and/or any of the appended claims, further comprising: moving the first coil carrier from the first distance defined between the first coil carrier and the center axis of the anchor to a third distance defined between the first coil carrier and the center axis of the anchor, the third distance less than the first distance.

The system/method of one or more of these clauses and/or any of the appended claims, further comprising: rotating the anchor, the first coil carrier, the first stator winding, the second coil carrier, and the second stator winding within an opening defined by a stator core to align an opening of the first stator winding with a stator core tooth.

The system/method of one or more of these clauses and/or any of the appended claims, further comprising: disengaging the first stator winding from the first coil carrier to position the first stator winding within a raceway defined by the stator core.

A system for an electric machine, the system comprising: a fixture including a fixture base defining a fixture tooth, wherein a fastening void is defined by the fixture tooth, the fastening void extending into the fixture base; a stator winding defining an opening therethrough; a coil carrier defining a carrier body, the coil carrier configured to operably couple the stator winding to the fixture base; an anchor; and a brace operably coupled with the anchor and the coil carrier, wherein the brace is configured to maintain a defined distance between the anchor and the coil carrier.

The system/method of one or more of these clauses and/or any of the appended claims, further comprising: a fastener including a first segment selectively retained by the carrier body and positioned through the opening defined by the stator winding and a second segment configured to be positioned within the fastening void.

The system/method of one or more of these clauses and/or any of the appended claims, wherein the second segment of the fastener is movable relative to the first segment of the fastener.

## Claims

1. A system for an electric machine (10, 12), the system comprising:
a fixture (162) including a fixture base (168) extending circumferentially and defining a first fixture tooth (172, 172a), wherein a first fastening void (178, 178a) is defined by the first fixture tooth, the first fastening void extending into the fixture base;
a first stator winding (22, 22a) defining a first opening (206) through the first stator winding;
a coil carrier (164) defining a carrier body (190); and
a first fastener (194a) including a first segment (196) selectively retained by the carrier body (190) and positioned through the first opening defined by the first stator winding and a second segment (198) configured to be positioned within the first fastening void.

2. The system of claim 1, wherein a second fastening void (178b) is defined by the first fixture tooth (172a), the second fastening void extending into the fixture base (168) in an offset location relative to the first fastening void.

3. The system of claim 2, further comprising:
a second fastener (194b) including a first segment selectively retained by the carrier body (190) and positioned through the first opening (206) defined by the first stator winding (22a) and a second segment configured to be positioned within the second fastening void (178b).

4. The system of any preceding claim, wherein the fixture base defines a second fixture tooth (172b) circumferentially offset from the first fixture tooth (172a), wherein a first fastening void of the second fixture tooth is defined by the second fixture tooth.,.

5. The system of claim 4, further comprising:
a second stator winding (22b) defining a second opening through the second stator winding, the second stator winding circumferentially offset from the first stator winding (22a); and
a first fastener (194c) for the second stator winding including a first segment selectively retained by the carrier body and positioned through the second opening defined by the second stator winding (22b) and a second segment configured to be positioned within the first fastening void (178c) of the second fixture tooth.

6. The system of any of claims 4 or 5, wherein a second fastening void (178d) of the second fixture tooth (172b) is defined by the second fixture tooth, the second fastening void of the second fixture tooth extending into the fixture base (168) in an offset location relative to the first fastening void (178c) of the second fixture tooth, and in particular further comprising a second fastener (194d) for the second stator winding (22b) including a first segment selectively retained by the carrier body and positioned through the second opening defined by the second stator winding and a second segment configured to be positioned within the second fastening void of the second fixture tooth.

7. The system of any preceding claim, further comprising:
an anchor (218) and at least one of a brace (216) operably coupled with the anchor and the coil carrier (164), wherein the brace is configured to maintain a defined distance between the anchor and the coil carrier and/or a mount (208) operably coupled with the coil carrier (164), the mount configured to maintain a defined distance between the anchor and the coil carrier.

8. The system of any preceding claim, further comprising:
an anchor (218);
a brace (216) operably coupled with the anchor, the brace including a flange (220), wherein the flange defines a flange slot (222);
a mount (208) operably coupled with the coil carrier (164), the mount including a protrusion, wherein the protrusion (212) defines a protrusion slot (214); and
a retainer (224) configured to be positioned through the flange slot (222) and the protrusion slot (214) to maintain a defined distance between the anchor (218) and the coil carrier (164).

9. The system of any preceding claim, wherein the first segment (196) and the second segment (198) of at least one fastener (194) are movable relative to one another.

10. A method (300) for assembling an electric machine (10, 12), the method comprising:
positioning (302) a first fastener operably coupled with a first coil carrier through a first opening defined by a first stator winding;
selectively coupling (304) the first fastener to a first fastener void defined by a fixture;
positioning (306) a second fastener operably coupled with a second coil carrier through a second opening defined by a second stator winding;
selectively coupling (308) the second fastener to a second fastener void defined by the fixture;
positioning (310) a bracket in a defined position on the fixture;
coupling (312) the first stator winding with the second stator winding through a busbar to form a phase ring, wherein a portion of the busbar extends through the bracket;
brazing (314) a first connection point of the first stator winding with the busbar; and/or
brazing a second connection point of the second stator winding with the busbar.

11. The method of claim 10, further comprising:
operably coupling (316) the first coil carrier to an anchor, the first coil carrier positioned a first distance from a center axis of the anchor and operably coupling (318) the second coil carrier to an anchor, the second coil carrier positioned a second distance from a center axis of the anchor,
wherein in particular: operably coupling the first coil carrier to the anchor further comprises operably coupling a first mount of the first coil carrier with a first flange of a brace of the anchor and operably coupling the second coil carrier to the anchor further comprises operably coupling a second mount of the second coil carrier with a second flange of the brace of the anchor.

12. The method of claim 11, further comprising:
inserting (320) the anchor, the first coil carrier, the first stator winding, the second coil carrier, and the second stator winding into an opening defined by a stator core.

13. The method of claim 12, further comprising:
moving (322) the first coil carrier from the first distance defined between the first coil carrier and the center axis of the anchor to a third distance defined between the first coil carrier and the center axis of the anchor, the third distance less than the first distance.

14. The method of claim 13, further comprising:
rotating (324) the anchor, the first coil carrier, the first stator winding, the second coil carrier, and the second stator winding within an opening defined by a stator core to align an opening of the first stator winding with a stator core tooth.

15. The method of claim 14, further comprising:
disengaging (326) the first stator winding from the first coil carrier to position the first stator winding within a raceway defined by the stator core.
